# FASCICULE DE BREVET EUROPEEN

(11) **EP 3 128 204 B1**
(45) Date de publication et mention de la délivrance du brevet: **13.12.2017**
(21) Numéro de dépôt: 16178201.6
(22) Date de dépôt: 06.07.2016
(51) Int. Cl.: F16F 15/14

(54) **DISPOSITIF D'AMORTISSEMENT D'OSCILLATIONS DE TORSION**
VORRICHTUNG ZUR TORSIONSSCHWINGUNGSDÄMPFUNG
DEVICE FOR DAMPING TORSIONAL OSCILLATIONS

(30) Priorité: 05.08.2015 FR 1557542
(43) Date de publication de la demande: 08.02.2017
(73) Titulaire: Valeo Embrayages, 80009 Amiens Cedex 2 (FR)
(72) Inventeur: CAILLERET, Franck, 80009 AMIENS (FR)
(74) Mandataire: Cardon, Nicolas

(56) Documents cités:
- WO-A1-2013/174616
- FR-A1- 3 000 157

## Description

La présente invention concerne un dispositif d'amortissement d'oscillations de torsion, notamment pour un système de transmission de véhicule automobile.

Dans une telle application, le dispositif d'amortissement d'oscillations de torsion peut être intégré à un système d'amortissement de torsion d'un embrayage apte à relier sélectivement le moteur thermique à la boîte de vitesses, afin de filtrer les vibrations dues aux acyclismes du moteur.

En variante, dans une telle application, le dispositif d'amortissement d'oscillations de torsion peut être intégré à un disque d'embrayage à friction ou à un convertisseur de couple hydrodynamique.

Un tel dispositif d'amortissement d'oscillations de torsion met classiquement en oeuvre un support et un ou plusieurs corps pendulaires mobiles par rapport à ce support, le déplacement par rapport au support de chaque corps pendulaire étant guidé par deux organes de roulement coopérant d'une part avec des pistes de roulement solidaires du support, et d'autre part avec des pistes de roulement solidaires des corps pendulaires. Chaque corps pendulaire comprend par exemple deux masses pendulaires rivetées entre elles.

Il est connu de choisir le dispositif d'amortissement, par exemple via la forme des pistes de roulement, de manière à ce que ce dernier filtre l'ordre d'excitation d'un moteur thermique à deux cylindres du véhicule, encore appelé « ordre 1 », l'ordre d'excitation d'un moteur thermique étant de façon connue le nombre d'explosions de ce moteur par tour de vilebrequin. De tels dispositifs sont très sensibles à la force de gravité, cette dernière pouvant alors causer des déplacements non souhaités des corps pendulaires, et donc affecter les performances de filtrage.

Pour remédier à ce problème, il est par exemple connu de la demande DE 10 2012 221 103 de prévoir des ressorts entre deux corps pendulaires voisins circonférentiellement, de manière à ce que les corps pendulaires ainsi reliés résistent à la force de gravité exercée tour à tour sur ces derniers lorsque le dispositif est animé d'un mouvement de rotation. L'insertion de ces ressorts suppose de ménager des logements additionnels dans les corps pendulaires ou de prévoir des moyens de fixation appropriés sur ces corps pendulaires, ce qui est coûteux et complexe. Du fait de l'insertion des ressorts, une fréquence de résonance additionnelle apparaît par ailleurs. L'insertion des ressorts peut encore nécessiter de ménager des découpes ouvertes dans le support du dispositif, réduisant alors le débattement des corps pendulaires. En outre, il est nécessaire de dimensionner correctement les ressorts et le maintien dans le temps des caractéristiques des ressorts n'est pas garanti.

L'invention a pour objet de réduire l'influence de la gravité sur les corps pendulaires, notamment lorsque ces derniers ont pour but de filtrer l'ordre d'excitation du moteur thermique à deux cylindres du véhicule, tout en remédiant à tout ou partie des inconvénients ci-dessus.

L'invention y parvient, en partant de l'art antérieur la plus proche WO 2013/174616 A1, selon l'un de ses aspects, à l'aide d'un dispositif d'amortissement d'oscillations de torsion, comprenant :
- au moins un support apte à se déplacer en rotation autour d'un axe,
- une pluralité de corps pendulaires, chaque corps pendulaire étant mobile par rapport au support,
- une pluralité d'organes de roulement, chaque organe de roulement coopérant avec une première piste de roulement solidaire du support et avec une deuxième piste de roulement solidaire d'un corps pendulaire, le déplacement de chaque corps pendulaire par rapport au support étant guidé par au moins deux de ces organes de roulement, et
- une pluralité d'organes d'interposition,
le support comprenant une pluralité de fenêtres dans chacune desquelles deux organes de roulement sont reçus, l'un de ces organes de roulement coopérant avec une deuxième piste de roulement solidaire d'un des corps pendulaires et l'autre de ces organes de roulement coopérant avec une deuxième piste de roulement solidaire d'un autre de ces corps pendulaires, lesdits corps pendulaires étant voisins circonférentiellement,
chaque organe d'interposition étant disposé dans une fenêtre du support et étant mobile par rapport à chacun des deux corps pendulaires dont le déplacement par rapport au support est guidé par un des deux organes de roulement reçus dans cette fenêtre, chaque organe d'interposition étant apte à venir en contact:
- d'une part avec une portion du contour de la fenêtre dans laquelle il est reçu,
- d'autre part avec une portion d'un des deux corps pendulaires, et
- d'autre part avec une portion de l'autre des deux corps pendulaires.

L'organe d'interposition permet ainsi qu'un écart minimal non nul existe en permanence entre ces deux corps pendulaires. On évite par conséquent les chocs entre ces deux corps pendulaires, notamment du fait de la gravité. L'organe d'interposition peut être dimensionné de manière à ce que l'écart minimal ainsi maintenu en permanence entre les deux corps pendulaires limite le déplacement de ces derniers sous l'effet de la gravité et entrave donc l'action de la gravité sur les corps pendulaires. Lorsque le support tourne, chaque corps pendulaire occupe successivement la position la plus haute autour de l'axe de rotation du support, et la présence des organes d'interposition limite ainsi le déplacement vers le bas de ce corps pendulaire sous l'effet de la gravité.

Chaque organe d'interposition est de préférence disposé dans une fenêtre angulairement entre les deux organes de roulement reçus dans cette fenêtre.

Selon l'invention, chaque organe d'interposition est libre de se déplacer dans la fenêtre, ce déplacement étant seulement limité par la venue en contact avec la portion du contour de la fenêtre, la portion d'un des deux corps pendulaires et la portion de l'autre des deux corps pendulaires. L'organe d'interposition est ainsi différent d'un rouleau ou galet monté libre en rotation sur un axe solidaire du support, par exemple.

L'organe d'interposition peut venir simultanément en contact avec la portion du contour de la fenêtre, la portion d'un des deux corps pendulaires, et la portion de l'autre des deux corps pendulaires. Ce contact simultané de l'organe d'interposition avec les portions mentionnées précédemment peut s'effectuer pour toute position de l'organe d'interposition dans la fenêtre. En variante, ce contact simultané ne se produit que dans certaines positions de l'organe d'interposition dans la fenêtre, ces positions correspondant par exemple à un débattement des corps pendulaires ou à l'arrêt du moteur thermique du dispositif.

Chacun des contacts ci-dessus peut être un roulement, c'est-à-dire que l'organe d'interposition peut rouler, simultanément ou non, sur :
- la portion du contour de la fenêtre dans laquelle il est reçu,
- la portion d'un des deux corps pendulaires, et
- la portion de l'autre des deux corps pendulaires.

La section transversale des organes d'interposition peut être de même forme que celle des organes de roulement. Il s'agit par exemple de disques. La surface de la section transversale d'un organe d'interposition est par exemple égale, supérieure ou inférieure à celle d'un organe de roulement.

Chaque organe d'interposition présente par exemple une section transversale circulaire.

Les organes d'interposition peuvent être réalisés dans des matériaux autres que ceux des organes de roulement. On utilise par exemple des matériaux moins rigides pour réaliser les organes d'interposition que pour réaliser les organes de roulement.

Au sens de la présente demande :
- « axialement » signifie « parallèlement à l'axe de rotation du support »,
- « radialement » signifie « le long d'un axe appartenant à un plan orthogonal à l'axe de rotation du support et coupant cet axe de rotation du support»,
- « angulairement » ou « circonférentiellement » signifie « autour de l'axe de rotation du support »,
- « orthoradialement » signifie « perpendiculairement à une direction radiale », et
- « solidaire » signifie « rigidement couplé ».

Toujours au sens de la présente demande, la position de repos du dispositif est la position de ce dernier dans laquelle les corps pendulaires sont soumis à une force centrifuge, mais non à des oscillations de torsion provenant des acyclismes du moteur thermique.

Le centre de gravité de chaque corps pendulaire peut décrire une courbe, lors de son déplacement par rapport au support pour filtrer une oscillation de torsion, et :
- la portion d'un des deux corps pendulaires avec laquelle vient en contact l'organe d'interposition,
- la portion de l'autre des deux corps pendulaires avec laquelle vient en contact l'organe d'interposition,
- ainsi le cas échéant que la portion du contour de la fenêtre avec laquelle vient en contact l'organe d'interposition,
peuvent définir chacun une courbe de la même famille que celle décrite par le centre de gravité de chaque corps pendulaire. Au sens de la présente demande, deux courbes appartiennent à une même famille si elles ont une même équation paramétrique.

La forme des premières et deuxièmes pistes de roulement peut être telle que chaque corps pendulaire soit déplacé par rapport au support à la fois :
- en translation autour d'un axe fictif parallèle à l'axe de rotation du support et,
- également en rotation autour du centre de gravité dudit corps pendulaire, un tel mouvement étant encore appelé « mouvement combiné » et divulgué par exemple dans la demande DE 10 2011 086 532.

Ce mouvement combiné peut être qualifié de mouvement combiné à 100%. On parle de mouvement combiné à 100% pour un corps pendulaire lorsque, dans la position de repos du dispositif, dans un plan perpendiculaire à l'axe de rotation, la normale au contact entre une première piste de roulement et l'un des organes de roulement guidant le déplacement de ce corps pendulaire, et la normale au contact entre une autre première piste de roulement et l'autre des organes de roulement guidant le déplacement de ce corps pendulaire sont sécantes sur l'axe de rotation du support.

Dans un tel cas de mouvement combiné à 100%, le centre de gravité de chaque pendulaire décrit notamment un cercle et la portion du bord de la fenêtre et les bords des portions des corps pendulaires le long desquelles roule l'organe d'interposition sont également circulaires. En variante, le centre de gravité peut décrire une épicycloïde. Il est par ailleurs possible que les portions des corps pendulaires le long desquels roule l'organe d'interposition définissent des droites.

En variante, la forme des premières et deuxièmes pistes de roulement précitées peut être telle que chaque corps pendulaire soit uniquement déplacé par rapport au support en translation autour d'un axe fictif parallèle à l'axe de rotation du support.

La portion du contour de la fenêtre du support avec laquelle vient en contact l'organe d'interposition peut appartenir au bord radialement extérieur de la fenêtre. Dans ce cas, l'organe d'interposition peut alors venir simultanément en contact avec cette portion du bord, la portion d'un des deux corps pendulaires, et la portion de l'autre des deux corps pendulaires :
- lorsque le dispositif est au repos, et/ou
- dès lors qu'une oscillation de torsion est filtrée, ou
- par intermittence lorsqu'une oscillation de torsion est filtrée.

Le dispositif peut comprendre un organe d'amortissement de butée disposé radialement entre le bord radialement intérieur de la fenêtre et l'organe d'interposition lorsque le dispositif est au repos, cet organe d'amortissement de butée étant apte à se comprimer lors d'un contact avec ce bord radialement intérieur de la fenêtre. Deux cavités peuvent être ménagées dans le bord radialement intérieur de la fenêtre, chacune de ces cavités présentant par exemple une dimension lui permettant d'accueillir l'organe d'amortissement de butée. Plus précisément, l'une des cavités peut accueillir l'organe d'amortissement de butée lors de la venue en butée des corps pendulaires contre le support à l'issue d'un déplacement de ces corps pendulaires dans le sens trigonométrique pour filtrer une oscillation de torsion tandis que l'autre cavité peut accueillir l'organe d'amortissement de butée lors de la venue en butée des corps pendulaires contre le support à l'issue d'un déplacement de ces corps pendulaires dans le sens non-trigonométrique pour filtrer une oscillation de torsion.

Cet organe d'amortissement de butée n'est par exemple solidaire ni des corps pendulaires, ni du support, ni de l'organe d'interposition. L'organe d'amortissement de butée est apte à venir en contact simultanément avec le bord radialement intérieur de la fenêtre, l'organe d'interposition et chaque corps pendulaire, pour amortir la venue en butée de ces corps pendulaires contre le support. Cet organe d'amortissement de butée peut être libre de se déplacer dans la fenêtre, son déplacement dans la fenêtre étant par exemple uniquement limité par les venues en contact avec ce bord de la fenêtre, les corps pendulaires et l'organe d'interposition.

Chaque fenêtre peut recevoir un unique organe d'amortissement de butée tel que mentionné précédemment.

L'organe d'amortissement de butée est par exemple réalisé en caoutchouc ou en élastomère. L'organe d'amortissement de butée peut présenter en section transversale une forme cylindrique.

Le cas échéant, d'autres moyens d'amortissement de la venue en butée d'un corps pendulaire contre le support sont prévus, ces autres moyens étant notamment solidaires du corps pendulaire.

Dans une variante, la portion du contour de la fenêtre du support avec laquelle vient en contact l'organe d'interposition appartient au bord radialement intérieur de cette fenêtre. Dans cette variante, l'organe d'interposition peut alors venir simultanément en contact avec cette portion du bord, la portion d'un des deux corps pendulaires, et la portion de l'autre des deux corps pendulaires :
- lorsque le dispositif est au repos, et/ou
- par intermittence lorsqu'une oscillation de torsion est filtrée.

Le bord radialement intérieur de la fenêtre dans laquelle est reçu l'organe d'interposition peut définir une protubérance faisant saillie radialement dans la fenêtre, et l'organe d'interposition peut reposer contre cette protubérance lorsque le moteur thermique du véhicule est à l'arrêt. La forme de cette protubérance, qui peut être arrondie dans un plan perpendiculaire à l'axe de rotation, peut permettre que l'organe d'interposition reste à une distance constante du bord radialement intérieur de la fenêtre tant que les corps pendulaires voisins sont centrifugés et non désynchronisés.

La présence des organes d'interposition peut permettre qu'en permanence l'écart entre deux corps pendulaires voisins circonférentiellement soit constant pour tous les corps pendulaires du dispositif. Plus précisément, si trois corps pendulaires sont présents, l'écart entre les corps pendulaires 1 et 2 sera égal à tout moment à celui entre les corps pendulaires 2 et 3, et égal à tout moment à celui entre les corps pendulaires 3 et 1, cette valeur égale pouvant varier avec la vitesse de rotation du moteur thermique du véhicule.

Selon un premier exemple de mise en oeuvre de l'invention, le support est unique et chaque corps pendulaire comprend :
- une première et une deuxième masses pendulaires espacées axialement l'une par rapport à l'autre, la première masse pendulaire étant disposée axialement d'un premier côté du support et la deuxième masse pendulaire étant disposée axialement d'un deuxième côté du support, et
- au moins un organe de liaison de la première et de la deuxième masses pendulaires, appariant lesdites masses.

Selon une première variante de ce premier exemple de mise en oeuvre, chaque corps pendulaire comprend deux organes de liaison appariant la première et la deuxième masse pendulaires, chaque organe de liaison définissant une deuxième piste de roulement coopérant respectivement avec l'un des deux organes de roulement guidant le déplacement de ce corps pendulaire par rapport au support. Chaque organe de roulement coopère ici avec une seule deuxième piste de roulement. Une portion du contour de cet organe de liaison, par exemple une partie de la surface radialement extérieure de cet organe de liaison, définit par exemple cette deuxième piste de roulement solidaire du corps pendulaire. Dans ce cas, une partie du contour de la fenêtre dans laquelle est disposé cet organe de liaison définit alors la première piste de roulement solidaire du support avec laquelle coopère l'organe de roulement pour guider le déplacement par rapport au support de ce corps pendulaire.

Un tel organe de liaison est par exemple emmanché en force via chacune de ses extrémités axiales dans une ouverture ménagée dans une des masses pendulaires. En variante, l'organe de liaison peut être soudé via ses extrémités axiales sur chaque masse pendulaire. L'organe de liaison peut encore être vissé ou riveté sur chaque masse pendulaire.

Selon cette première variante du premier exemple de mise en oeuvre de l'invention, chaque organe de roulement peut alors être uniquement sollicité en compression entre la première piste de roulement solidaire du support et la deuxième piste de roulement solidaire du corps pendulaire telles que mentionnées ci-dessus. Ces pistes de roulement coopérant avec un même organe de roulement peuvent être au moins en partie radialement en regard, c'est-à-dire qu'il existe des plans perpendiculaires à l'axe de rotation dans lesquels ces pistes de roulement s'étendent toutes les deux.

Selon cette première variante du premier exemple de mise en oeuvre, la portion d'un des deux corps pendulaires avec laquelle vient en contact l'organe d'interposition peut être formée par une partie d'un des organes de liaison de ce corps pendulaire, et la portion de l'autre des deux corps pendulaires avec laquelle vient en contact l'organe d'interposition peut être formée par une partie d'un des organes de liaison de l'autre des deux corps pendulaires. Dans un tel cas, chaque organe de liaison vient d'une part au contact d'un organe de roulement et d'autre part au contact d'un organe d'interposition.

Selon cette première variante du premier exemple de mise en oeuvre de l'invention, et en alternative à ce qui précède immédiatement, la portion d'un des deux corps pendulaires avec laquelle vient en contact l'organe d'interposition peut être formée par une partie de l'extrémité circonférentielle de la première, respectivement deuxième, masse pendulaire de l'un des deux corps pendulaires, et la portion de l'autre des deux corps pendulaires avec laquelle vient en contact l'organe d'interposition peut être formée par une partie de l'extrémité circonférentielle de la première, respectivement deuxième, masse pendulaire de l'autre des deux corps pendulaires, ces extrémités circonférentielles étant en regard. Dans ce cas, l'organe d'interposition peut venir en contact des masses pendulaires directement, et non indirectement via un organe de liaison appariant ces masses pendulaires.

Selon cette alternative de la première variante, chaque organe d'interposition peut alors s'étendre dans une fenêtre sur une dimension axiale lui permettant de venir en contact avec :
- la première et la deuxième masses pendulaires de l'un des deux corps pendulaires, et
- la première et la deuxième masses pendulaires de l'autre des deux corps pendulaires.

En alternative, toujours selon cette première variante, l'organe d'interposition ne vient en contact que de la première masse pendulaire de l'un des deux corps pendulaires et que de la première masse pendulaire de l'autre des deux corps pendulaires. En alternative encore, l'organe d'interposition ne vient en contact que de la deuxième masse pendulaire de l'un des deux corps pendulaires et que de la deuxième masse pendulaire de l'autre des deux corps pendulaires.

Selon une deuxième variante du premier exemple de mise en oeuvre de l'invention, le support est toujours unique et chaque organe de roulement coopère avec deux deuxièmes pistes de roulement solidaires du corps pendulaire, l'une de ces deuxièmes pistes de roulement étant définie par la première masse pendulaire et l'autre de ces deuxièmes pistes de roulement étant définie par la deuxième masse pendulaire.

Selon cette deuxième variante, la portion d'un des deux corps pendulaires avec laquelle vient en contact l'organe d'interposition est formée par une partie de l'extrémité circonférentielle de la première, respectivement deuxième, masse pendulaire de l'un des deux corps pendulaires, et la portion de l'autre des deux corps pendulaires avec laquelle vient en contact l'organe d'interposition est formée par une partie de l'extrémité circonférentielle de la première, respectivement deuxième, masse pendulaire de l'autre des deux corps pendulaires, ces extrémités circonférentielles étant en regard.

Selon cette deuxième variante, chaque organe de liaison est par exemple un rivet. Le rivet peut être reçu dans une fenêtre du support dans laquelle est déjà reçu un organe de roulement. Comme précédemment, une partie du contour de la fenêtre définit alors la première piste de roulement solidaire du support.

Chaque organe de roulement peut, selon cette deuxième variante du premier exemple de mise en oeuvre de l'invention, comprendre successivement axialement:
- une portion disposée dans une cavité de la première masse pendulaire et coopérant avec la deuxième piste de roulement formée par une partie du contour de cette cavité,
- une portion disposée dans une fenêtre du support et coopérant avec la première piste de roulement formée par une partie du contour de cette fenêtre, et
- une portion disposée dans une cavité de la deuxième masse pendulaire et coopérant avec la deuxième piste de roulement formée par une partie du contour de cette cavité.

Similairement à ce qui a été mentionné précédemment, chaque organe d'interposition peut alors s'étendre selon cette deuxième variante dans une fenêtre sur une dimension axiale lui permettant de venir en contact avec :
- la première et la deuxième masses pendulaires de l'un des deux corps pendulaires, et
- la première et la deuxième masses pendulaires de l'autre des deux corps pendulaires.

En alternative, l'organe d'interposition ne vient en contact que de la première masse pendulaire de l'un des deux corps pendulaires et que de la première masse pendulaire de l'autre des deux corps pendulaires. En alternative encore et toujours selon cette deuxième variante, l'organe d'interposition ne vient en contact que de la deuxième masse pendulaire de l'un des deux corps pendulaires et que de la deuxième masse pendulaire de l'autre des deux corps pendulaires.

Selon un deuxième exemple de mise en oeuvre de l'invention, le dispositif comprend deux supports distincts décalés axialement et solidaires, chaque corps pendulaire comprenant au moins une masse pendulaire, notamment une unique masse pendulaire ou plusieurs masses pendulaires qui sont de préférence solidaires, disposée axialement entre les deux supports. La masse pendulaire est alors prise en sandwich axialement entre les deux supports. Les deux supports sont par exemple solidarisés via une liaison telle qu'un rivetage positionnée radialement intérieurement par rapport aux corps pendulaires.

Deux capots peuvent alors être positionnés axialement autour de l'ensemble formé par les deux supports et les corps pendulaires. On peut ainsi trouver successivement axialement :
- l'un des capots,
- l'un des supports,
- la ou les masses pendulaires,
- l'autre des supports, et
- l'autre des capots.

Selon une première variante de ce deuxième exemple de mise en oeuvre de l'invention, chaque corps pendulaire présente une excroissance faisant saillie axialement dans une fenêtre d'un des supports, cette excroissance définissant une deuxième piste de roulement solidaire du corps pendulaire.

Deux excroissances peuvent être prévues sur chaque côté d'une masse pendulaire ou de l'ensemble solidaire de masses pendulaires et, d'un côté à l'autre de la masse pendulaire ou de cet ensemble solidaire de masses pendulaires, ces excroissances peuvent s'étendre axialement dans des directions opposées et être axialement superposées. Les deux excroissances ménagées d'un premier côté de la masse pendulaire ou de l'ensemble solidaire de masses pendulaires font alors saillie dans deux fenêtres différentes de l'un des supports tandis que les deux excroissances ménagées d'un deuxième côté opposé au premier côté de la masse pendulaire ou de l'ensemble solidaire de masses pendulaires font alors saillie dans deux fenêtres différentes de l'autre des supports.

Le déplacement d'un corps pendulaire par rapport au support peut ici être guidé par quatre organes de roulement :
- un premier organe de roulement coopérant avec une première piste de roulement définie par une partie du contour d'une des fenêtres ménagées dans le support disposé du premier côté de la masse pendulaire ou de l'ensemble de masses pendulaires solidaires et avec une deuxième piste de roulement définie par une des excroissances ménagées de ce premier côté de la masse pendulaire ou de l'ensemble de masses pendulaires solidaires,
- un deuxième organe de roulement coopérant avec une première piste de roulement définie par une partie du contour d'une autre fenêtre ménagée dans le support disposé du premier côté de la masse pendulaire ou de l'ensemble solidaire de masses pendulaires et avec une deuxième piste de roulement définie par une autre des excroissances ménagées de ce premier côté de la masse pendulaire ou de l'ensemble solidaire de masses pendulaires,
- un troisième organe de roulement coopérant avec une première piste de roulement définie par une partie du contour d'une des fenêtres ménagées dans le support disposé du deuxième côté de la masse pendulaire ou de l'ensemble solidaire de masses pendulaires et avec une deuxième piste de roulement définie par une des excroissances ménagées de ce deuxième côté de la masse pendulaire ou de l'ensemble solidaire de masses pendulaires, et
- un quatrième organe de roulement coopérant avec une première piste de roulement définie par une partie du contour d'une autre fenêtre ménagée dans le support disposé du deuxième côté de la masse pendulaire ou de l'ensemble solidaire de masses pendulaires et avec une deuxième piste de roulement définie par une autre des excroissances ménagées de ce deuxième côté de la masse pendulaire ou de l'ensemble solidaire de masses pendulaires,

Chacun de ces quatre organes de roulement peut être uniquement sollicité en compression, comme expliqué en référence avec le premier exemple de mise en oeuvre de l'invention.

Selon cette première variante, la portion d'un des deux corps pendulaires avec laquelle vient en contact l'organe d'interposition peut être formée par une partie de l'excroissance de ce corps pendulaire et la portion de l'autre des deux corps pendulaires avec laquelle vient en contact l'organe d'interposition peut être formée par une partie de l'excroissance de cet autre des deux corps pendulaires.

Dans ce cas, deux organes d'interposition distincts peuvent être prévus entre deux corps pendulaires voisins circonférentiellement. L'un de ces organes d'interposition est alors disposé du premier côté des masses pendulaires et peut venir au contact :
- d'une portion d'un bord de la fenêtre dans laquelle font saillie axialement une excroissance de l'un des deux corps pendulaires et une excroissance de l'autre des deux corps pendulaires et,
- de ces deux excroissances précitées.

Toujours dans ce cas, l'autre de ces organes d'interposition est disposé du deuxième côté des masses pendulaires et il peut venir au contact :
- d'une portion d'un bord de la fenêtre dans laquelle font saillie axialement une autre excroissance de l'un des deux corps pendulaires et une autre excroissance de l'autre des deux corps pendulaires, et
- de ces deux excroissances précitées.

En alternative de cette première variante, la portion d'un des deux corps pendulaires avec laquelle vient en contact l'organe d'interposition peut être formée par une partie de l'extrémité circonférentielle de la masse pendulaire ou de l'ensemble solidaire de masses pendulaires de ce corps pendulaire et la portion de l'autre des deux corps pendulaires avec laquelle vient en contact l'organe d'interposition peut être formée par une partie de l'extrémité circonférentielle de la masse pendulaire ou de l'ensemble solidaire de masses pendulaires de cet autre corps pendulaire, ces extrémités circonférentielles étant en regard. Dans ce cas, un unique organe d'interposition peut alors être prévu entre deux corps pendulaires voisins circonférentiellement.

Selon cette première variante, chaque masse pendulaire ou chaque ensemble solidaire de masses pendulaires n'est alors pas traversé par un organe de roulement.

Selon une deuxième variante de ce deuxième exemple de mise en oeuvre de l'invention, la masse pendulaire présente au moins deux cavités traversantes, de manière à ce que chaque organe de roulement soit reçu :
- dans une fenêtre ménagée dans l'un des deux supports,
- dans une cavité ménagée dans la masse pendulaire ou dans chacune des masses de l'ensemble solidaire de masses pendulaires, et
- dans une fenêtre ménagée dans l'autre des deux supports,
la portion d'un des deux corps pendulaires avec laquelle vient en contact l'organe d'interposition étant formée par une partie de l'extrémité circonférentielle de la masse pendulaire ou de l'ensemble solidaire de masses pendulaires de l'un des deux corps pendulaires, et la portion de l'autre des deux corps pendulaires avec laquelle vient en contact l'organe d'interposition étant formée par une partie de l'extrémité circonférentielle de la masse pendulaire ou de l'ensemble solidaire de masses pendulaires de l'autre des deux corps pendulaires, ces extrémités circonférentielles étant en regard.

Selon cette deuxième variante, chaque organe d'interposition coopère avec les deux supports et avec deux corps pendulaires voisins circonférentiellement.

Dans tout ce qui précède, chaque organe d'interposition peut présenter dans un plan perpendiculaire à l'axe de rotation du support, une portion intérieure dans un premier matériau et une portion extérieure dans un deuxième matériau, différent du premier matériau. Le deuxième matériau est par exemple plus rigide que le premier matériau. Le premier matériau n'étant pas en contact avec le support et les deux corps pendulaires, dès lors qu'il définit le coeur de cet organe d'interposition, on peut choisir pour le réaliser un matériau plus léger et/ou moins rigide que celui du deuxième matériau. On peut ainsi réduire l'inertie des organes d'interposition et ainsi les bruits associés aux chocs subis par ces derniers.

Dans tout ce qui précède, chaque organe d'interposition peut s'étendre axialement et présenter une section transversale de rayon constant sur toute sa longueur.

En variante, dans tout ce qui précède, et notamment dans la deuxième variante du deuxième exemple de mise en oeuvre de l'invention, chaque organe d'interposition peut s'étendre axialement et comprendre successivement au moins deux portions de section transversale de diamètres différents. Chaque organe d'interposition comprend par exemple successivement axialement :
- une portion cylindrique d'un premier diamètre,
- une portion cylindrique d'un deuxième diamètre, supérieur au premier diamètre, et
- une portion cylindrique du premier diamètre.

Un tel organe d'interposition, qui peut être qualifié d' « étagé », présente avantageusement un caractère imperdable.

Dans tout ce qui précède, le dispositif d'amortissement d'oscillations de torsion peut être configuré de manière à ce que le déplacement des corps pendulaires permette de filtrer l'ordre d'excitation du moteur thermique du véhicule auquel le dispositif est intégré, ce moteur thermique ayant notamment deux ou trois cylindres.

Dans tout ce qui précède, le dispositif comprend par exemple un nombre de corps pendulaires compris entre deux et huit, notamment trois ou six corps pendulaires. Tous ces corps pendulaires peuvent se succéder circonférentiellement. Le dispositif peut ainsi comprendre une pluralité de plans perpendiculaires à l'axe de rotation dans chacun desquels tous les corps pendulaires sont disposés.

Dans tout ce qui précède, chaque support peut être réalisé d'une seule pièce, étant par exemple entièrement métallique.

Dans tout ce qui précède, le dispositif peut comprendre au moins une pièce d'interposition dont au moins une partie est axialement disposée entre un support et une masse pendulaire du corps pendulaire. Une telle pièce d'interposition peut ainsi limiter le déplacement axial du corps pendulaire par rapport au support, évitant ainsi les chocs axiaux entre lesdites pièces, et ainsi une usure et des bruits non souhaités, notamment lorsque le support et/ou la masse pendulaire sont en métal. Plusieurs pièces d'interposition, par exemple sous forme de patins, peuvent être prévues. Les pièces d'interposition sont notamment réalisées en un matériau amortissant, tel que du plastique ou du caoutchouc.

Les pièces d'interposition sont par exemple portées par les corps pendulaires. Les pièces d'interposition peuvent être positionnées sur un corps pendulaire de manière à ce qu'il y ait toujours au moins une pièce d'interposition dont au moins une partie est axialement interposée entre une masse pendulaire et le support, quelles que soient les positions relatives du support et de ladite masse lors du déplacement par rapport au support du corps pendulaire.

Dans tout ce qui précède, le dispositif peut comprendre :
- au moins un premier corps pendulaire permettant de filtrer une première valeur d'ordre des oscillations de torsion, et
- au moins un deuxième corps pendulaire permettant de filtrer une deuxième valeur d'ordre des oscillations de torsion, différente de la première valeur d'ordre.

Dans tout ce qui précède, chaque fenêtre peut ne recevoir que deux organes de roulement.

L'invention a encore pour objet un dispositif d'amortissement d'oscillations de torsion, comprenant :
- au moins un support apte à se déplacer en rotation autour d'un axe,
- une pluralité de corps pendulaires, chaque corps pendulaire étant mobile par rapport au support,
- une pluralité d'organes de roulement, chaque organe de roulement coopérant avec une première piste de roulement solidaire du support et avec une deuxième piste de roulement solidaire d'un corps pendulaire, le déplacement de chaque corps pendulaire par rapport au support étant guidé par au moins deux de ces organes de roulement, et
- une pluralité d'organes d'interposition,
le support comprenant une pluralité de fenêtres dans chacune desquelles deux organes de roulement sont reçus, l'un de ces organes de roulement coopérant avec une deuxième piste de roulement solidaire d'un des corps pendulaires et l'autre de ces organes de roulement coopérant avec une deuxième piste de roulement solidaire d'un autre de ces corps pendulaires, lesdits corps pendulaires étant voisins circonférentiellement,
chaque organe d'interposition étant disposé dans une fenêtre et étant libre de se déplacer dans cette dernière de manière à s'interposer en permanence entre les deux corps pendulaires guidés par les deux organes de roulement reçus dans cette fenêtre.

Tout ou partie des caractéristiques ci-dessus s'applique encore à cet autre aspect de l'invention.

L'invention a encore pour objet, selon un autre de ses aspects, un dispositif d'amortissement d'oscillations de torsion, comprenant :
- au moins un support apte à se déplacer en rotation autour d'un axe,
- une pluralité de corps pendulaires, chaque corps pendulaire étant mobile par rapport au support,
- une pluralité d'organes de roulement, chaque organe de roulement coopérant avec une première piste de roulement solidaire du support et avec une deuxième piste de roulement solidaire d'un corps pendulaire, le déplacement de chaque corps pendulaire par rapport au support étant guidé par au moins deux de ces organes de roulement, et
- une pluralité d'organes d'amortissement de butée mobiles par rapport au support et à chaque corps pendulaire,
le support comprenant une pluralité de fenêtres dans chacune desquelles deux organes de roulement sont reçus, l'un de ces organes de roulement coopérant avec au moins une deuxième piste de roulement solidaire d'un des corps pendulaires et l'autre de ces organes de roulement coopérant avec au moins une deuxième piste de roulement solidaire d'un autre de ces corps pendulaires, lesdits corps pendulaires étant voisins circonférentiellement, et. chaque organe d'amortissement de butée étant reçu dans une de ces fenêtres.

Chaque organe d'amortissement de butée coopère par exemple avec le bord radialement intérieur de la fenêtre et l'un au moins des corps pendulaires pour amortir la butée de ce ou ces derniers contre le support. Chaque organe d'amortissement de butée peut coopérer avec les cavités précitées mentionnées dans ce bord radialement intérieur de la fenêtre.

Chaque organe d'amortissement de butée est notamment apte à se comprimer lors d'un contact avec ce bord radialement intérieur de la fenêtre. Chaque organe d'amortissement de butée est notamment apte à venir en contact simultanément avec le bord radialement intérieur de la fenêtre et chaque corps pendulaire guidé par un organe de roulement reçu dans cette fenêtre. Cet organe d'amortissement de butée peut être libre de se déplacer dans la fenêtre, son déplacement dans la fenêtre étant par exemple uniquement limité par les venues en contact avec ce bord de la fenêtre et les corps pendulaires.

Tout ou partie des caractéristiques mentionnées ci-dessus s'applique encore à cet autre aspect de l'invention, notamment le fait qu'un seul organe d'amortissement de butée soit reçu dans chaque fenêtre ménagée dans le support.

L'invention a encore pour objet, selon un autre de ses aspects, un composant pour système de transmission d'un véhicule automobile, le composant étant notamment un double volant amortisseur, un convertisseur de couple hydrodynamique ou un disque d'embrayage à friction, ou un double embrayage à sec ou humide, ou un simple embrayage humide, ou un volant solidaire d'un vilebrequin, ou un composant faisant partie d'un groupe motopropulseur hybride, comprenant un dispositif d'amortissement tel que défini précédemment.

Le support du dispositif d'amortissement d'oscillations de torsion peut alors être l'un parmi :
- un voile du composant,
- une rondelle de guidage du composant,
- une rondelle de phasage du composant, ou
- un support distinct dudit voile, de ladite rondelle de guidage et de ladite rondelle de phasage.

L'invention a encore pour objet, selon un autre de ses aspects, un groupe motopropulseur de véhicule comprenant :
- un moteur thermique de propulsion du véhicule, notamment à deux, trois ou quatre cylindres, et
- un composant pour système de transmission tél que défini ci-dessus.

L'invention pourra être mieux comprise à la lecture de la description qui va suivre d'exemples non limitatifs de mise en oeuvre de celle-ci et à l'examen du dessin annexé sur lequel :
- la figure 1 représente un dispositif d'amortissement d'oscillations de torsion selon une première variante d'un premier exemple de mise en oeuvre de l'invention,
- la figure 2 représente un détail du dispositif de la figure 1,
- les figures 3 à 6 représentent différentes alternatives à ce qui est représenté sur la figure 2,
- la figure 7 représente un dispositif d'amortissement d'oscillations de torsion selon une deuxième variante du premier exemple de mise en oeuvre de l'invention,
- la figure 8 représente un dispositif d'amortissement d'oscillations de torsion selon une première variante d'un deuxième exemple de mise en oeuvre de l'invention,
- les figures 9 et 10 sont des vues en coupe respectivement selon IX-IX et X-X du dispositif représenté sur la figure 8,
- la figure 11 représente un dispositif d'amortissement d'oscillations de torsion selon une deuxième variante d'un deuxième exemple de mise en oeuvre de l'invention, et
- les figures 12 et 13 sont des vues en coupe respectivement selon XII-XII et XIII-XIII du dispositif représenté sur la figure 11.

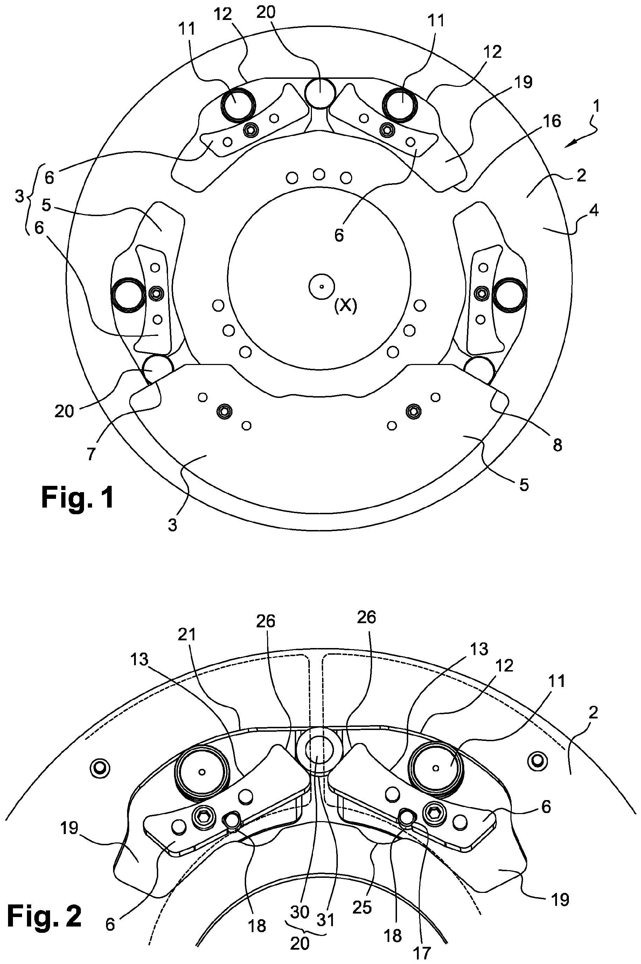

On a représenté sur la figure 1 un dispositif d'amortissement 1 d'oscillations de torsion selon une première variante d'un premier exemple de mise en oeuvre de l'invention.

Le dispositif d'amortissement 1 est de type oscillateur pendulaire. Le dispositif 1 est notamment apte à équiper un système de transmission de véhicule automobile, étant par exemple intégré à un composant non représenté d'un tel système de transmission, ce composant étant par exemple un double volant amortisseur, un convertisseur de couple hydrodynamique ou un disque d'embrayage.

Ce composant peut faire partie d'un groupe motopropulseur d'un véhicule automobile, ce groupe comprenant un moteur thermique notamment à deux, trois ou quatre cylindres.

Sur la figure 1, le dispositif 1 est au repos, c'est-à-dire qu'il ne filtre pas les oscillations de torsion transmises par la chaîne de propulsion du fait des acyclismes du moteur thermique.

De manière connue, un tel composant peut comprendre un amortisseur de torsion présentant au moins un élément d'entrée, au moins un élément de sortie, et des organes de rappel élastique à action circonférentielle qui sont interposés entre lesdits éléments d'entrée et de sortie. Au sens de la présente demande, les termes « entrée » et « sortie » sont définis par rapport au sens de transmission du couple depuis le moteur thermique du véhicule vers les roues de ce dernier.

Le dispositif 1 comprend dans l'exemple considéré:
- un support 2 apte à se déplacer en rotation autour d'un axe X, et
- une pluralité de corps pendulaires 3 mobiles par rapport au support 2.

Dans l'exemple considéré, trois corps pendulaires 3 sont prévus, étant répartis de façon uniforme sur le pourtour de l'axe X.

Le support 2 du dispositif d'amortissement 1 peut être constitué par :
- un élément d'entrée de l'amortisseur de torsion,
- un élément de sortie ou un élément de phasage intermédiaire disposé entre deux séries de ressort de l'amortisseur,
- un élément lié en rotation à un des éléments précités et distinct de ces derniers, étant alors par exemple un support propre au dispositif 1.

Le support 2 est notamment une rondelle de guidage ou une rondelle de phasage. Le support peut encore être autre, par exemple un flasque du composant.

Dans l'exemple considéré, le support 2 présente globalement une forme d'anneau comportant deux côtés opposés 4 qui sont ici des faces planes.

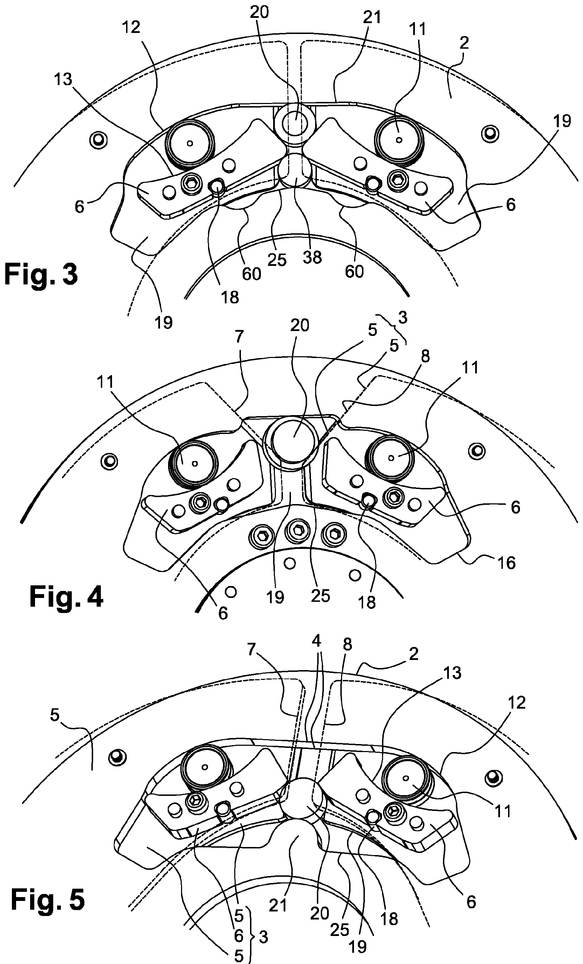

Comme on peut notamment le voir sur les figures 4 et 5, chaque corps pendulaire 3 comprend dans l'exemple considéré :
- deux masses pendulaires 5, chaque masse pendulaire 5 s'étendant axialement en regard d'un côté 4 du support 2, et
- deux organes de liaison 6 solidarisant les deux masses pendulaires 5.

Sur la figure 1, deux corps pendulaires 3 sont représentés de façon incomplète, l'une des masses pendulaires 5 n'étant pas représentée, pour la clarté du dessin.

Les organes de liaison 6, encore appelés « entretoises », sont dans l'exemple considéré décalés angulairement. Chaque corps 3 s'étend angulairement entre deux extrémités circonférentielles, qui correspondent respectivement aux extrémités circonférentielles 7 et 8 des masses pendulaires 5 de ce corps.

Dans l'exemple des figures 1 à 6, chaque organe de liaison est vissé sur une des masses pendulaires 5 de manière à solidariser ces dernières entre elles. Dans une alternative non représentée, chaque extrémité d'un organe de liaison 6 est emmanchée en force dans une ouverture ménagée dans une des masses pendulaires 5 du corps pendulaire 3, de manière à solidariser entre elles ces deux masses pendulaires 5.

Dans encore une autre alternative, chaque extrémité d'un organe de liaison 6 est solidarisée à une des masses pendulaires 5 par soudure.

Dans encore une autre alternative, chaque organe de liaison est riveté à une des masses pendulaires 5.

Le dispositif 1 comprend encore des organes de roulement 11 guidant le déplacement des corps pendulaires 3 par rapport au support 2. Les organes de roulement 11 sont ici des rouleaux.

Dans l'exemple décrit, le mouvement par rapport au support 2 de chaque corps pendulaire 3 est guidé par deux organes de roulement 11. Ce mouvement est par exemple un mouvement combiné.

Chaque organe de roulement 11 est reçu dans une fenêtre 19 ménagée dans le support 2. Comme représenté sur les figures, deux organes de roulement 11 associés à deux corps pendulaires 3 différents et voisins circonférentiellement sont reçus dans une même fenêtre 19 ménagée dans le support 2. Autrement dit, à l'intérieur d'une même fenêtre 19, sont reçus :
- un organe de roulement 11 guidant le déplacement d'un corps pendulaire 3, et
- un organe de roulement 11 guidant le déplacement d'un autre corps pendulaire 3 qui est circonférentiellement voisin.

Chaque fenêtre 19 présente un contour 16 fermé et une partie de ce contour 16 définit une première piste de roulement 12 solidaire du support 2, sur laquelle l'un des organes de roulement 11 reçus dans cette fenêtre 19 va rouler, tandis qu'une autre partie de ce contour fermé 16 définit une autre première piste de roulement 12 solidaire du support 2, sur laquelle l'autre organe de roulement 11 reçu dans la fenêtre 19 va rouler.

Dans l'exemple des figures 1 à 6, chaque fenêtre 19 reçoit par ailleurs :
- un organe de liaison 6 d'un corps pendulaire 3, et
- un organe de liaison 6 d'un autre corps pendulaire 3 qui est voisin circonférentiellement.

Chaque organe de liaison 6 définit dans l'exemple des figures 1 à 6 une deuxième piste de roulement 13 qui est solidaire du corps pendulaire 3 auquel cet organe de liaison 6 appartient et sur laquelle roule un des organes de roulement 11 pour guider le déplacement de ce corps pendulaire 3 par rapport au support 2.

Chaque organe de liaison 6 présente sur son bord radialement intérieur une encoche 17 dans laquelle un amortisseur de butée 18, par exemple en élastomère ou en caoutchouc, est reçu.

Comme on peut le voir sur les figures 1 à 6, chaque fenêtre 19 reçoit en outre un organe d'interposition 20. Cet organe d'interposition 20 est disposé dans la fenêtre 19 de manière à venir s'interposer entre les deux corps pendulaires 3 dont le déplacement par rapport au support 2 est guidé par un organe de roulement 11 reçu dans cette fenêtre 19.

Chaque organe d'interposition 20 présente ici une section transversale circulaire, tout comme chaque organe de roulement 11.

Comme on peut le voir sur les figures 1 à 6, chaque organe d'interposition 20 est monté libre dans une fenêtre 19 et cet organe d'interposition 20 est apte à venir en contact:
- d'une part avec une portion du contour 16 de la fenêtre 19,
- d'autre part avec un bord d'une portion d'un des deux corps pendulaires 3, et
- d'autre part avec un bord d'une portion de l'autre des deux corps pendulaires 3.

Cet organe d'interposition 20 permet ainsi qu'un écart minimal non nul existe en permanence entre ces deux corps pendulaires 3 voisins circonférentiellement.

Sur les figures 1 à 4, le dispositif 1 est au repos et l'organe d'interposition 20 vient en contact avec le bord de la portion d'un des deux corps pendulaires 3, et le bord de la portion de l'autre des deux corps pendulaires 3 tandis qu'un jeu existe entre l'organe d'interposition 20 et la portion du contour 16 de la fenêtre 19.

Lorsqu'une oscillation de torsion est filtrée par les corps pendulaires 3, ces derniers se déplacent autour de l'axe X de rotation du support 2, et le cas échéant autour de leur centre de gravité. Un tel déplacement des corps pendulaires 3 est transmis aux organes d'interposition 20 qui roulent le long de ladite portion du contour 16 de la fenêtre 19 et le long d'une portion appartenant à l'un des deux corps pendulaires 3 entre lesquels ils sont interposés. Cette coopération entre organes d'interposition 20 et corps pendulaires 3 permet le maintien, via les organes d'interposition 20, d'une distance minimale entre les deux corps pendulaires 3. Lors de ce déplacement, chaque organe d'interposition 20 peut venir simultanément en contact avec la portion 19 du contour 16 de la fenêtre, la portion appartenant à l'un des deux corps pendulaires 3 et la portion appartenant à l'autre des corps pendulaires 3.

Dans l'exemple des figures 1 à 4, la portion du contour 16 de la fenêtre 19 du support 2 avec laquelle vient en contact l'organe d'interposition 20 et le long de laquelle il peut rouler appartient au bord radialement extérieur 21 de la fenêtre 19.

L'organe d'interposition 20 vient alors simultanément en contact avec cette portion du bord 21, le bord de la portion d'un des deux corps pendulaires 3, et le bord de la portion de l'autre des deux corps pendulaires 3 par intermittence lorsqu'une oscillation de torsion est filtrée.

Dans l'exemple des figures 1 à 3, la portion d'un des deux corps pendulaires 3 le long de laquelle roule l'organe d'interposition 20 est formée par une partie d'un des organes de liaison 6 de ce corps pendulaire, et la portion de l'autre des deux corps pendulaires le long de laquelle roule l'organe d'interposition 20 est formée par une partie d'un des organes de liaison 6 de l'autre des deux corps pendulaires 3. Cette partie d'un organe de liaison 6 est ici une fraction de sa surface latérale 26.

Ainsi, chaque organe de liaison 6 présente :
- une surface radialement extérieure dont une portion définit une deuxième piste de roulement 13, et
- une surface latérale 26 dont une fraction coopère par roulement avec un organe d'interposition 20.

Comme on peut le voir sur les figures 2 et 3 sur lesquelles une masse pendulaire 5 de chaque corps pendulaire 3 est représentée en transparence, l'organe d'interposition peut alors être disposé en partie à l'intérieur d'un corps pendulaire dans l'espace laissé libre par le fait que les masses pendulaires 5 d'un corps pendulaire 3 s'étendent angulairement au-delà des organes de liaison 6.

Dans l'exemple des figures 1 à 3, chaque organe d'interposition 20 comprend un seul et unique diamètre sur toute sa longueur.

Dans l'exemple des figures 2 et 3, chaque organe d'interposition 20 est réalisé en deux matériaux. Le coeur 30 de cet organe d'interposition est réalisé dans un premier matériau distinct du deuxième matériau qui est utilisé pour réaliser la portion extérieure 31 de cet organe d'interposition 20. Le premier matériau est par exemple plus léger que le deuxième matériau.

Dans l'exemple de la figure 3, un organe d'amortissement de butée 38 est prévu dans chaque fenêtre 19. Cet organe d'amortissement de butée 38 est disposé radialement entre le bord radialement intérieur 25 de la fenêtre 19 et l'organe d'interposition 20 et il présente une section transversale cylindrique.

Cet organe d'amortissement de butée 38 est réalisé en caoutchouc ou en élastomère et il est apte à se comprimer lors d'un contact avec le bord radialement intérieur 25 de la fenêtre 19. Cet organe d'amortissement 38 peut ainsi coopérer avec l'amortisseur de butée 18 mentionné précédemment pour amortir les chocs liés à la venue en butée du corps pendulaire 3 contre le support 2.

Comme on peut le voir sur la figure 3, cet organe d'amortissement de butée 38 n'est dans l'exemple décrit solidaire ni des corps pendulaires 3, ni du support 2, ni de l'organe d'interposition 20. L'organe d'amortissement de butée 38 vient par exemple en contact simultanément avec le bord radialement intérieur 25 de la fenêtre 19, l'organe d'interposition 20 et chaque corps pendulaire 3 lorsqu'il amortit la venue en butée de ces corps pendulaires 3 contre le support 2.

Dans l'exemple de la figure 3, deux cavités 60 sont ménagées dans le bord radialement intérieur 25 de la fenêtre 19, et chacune de ces cavités 60 présente une dimension lui permettant d'accueillir l'organe d'amortissement de butée 38. Chaque cavité est dans l'exemple considéré radialement disposée entre l'axe de rotation X et un des organes de roulement 11 reçus dans la fenêtre 19 lorsque le dispositif 1 est au repos.

L'une des cavités 60 accueille l'organe d'amortissement de butée 38 lors de la venue en butée des corps pendulaires 3 contre le support 2 à l'issue d'un déplacement de ces corps pendulaires 3 dans le sens trigonométrique pour filtrer une oscillation de torsion, tandis que l'autre cavité 60 ménagée dans le bord radialement intérieur 25 de la fenêtre 19 accueille l'organe d'amortissement de butée 38 lors de la venue en butée des corps pendulaires 3 contre le support 2 à l'issue d'un déplacement de ces corps pendulaires 3 dans le sens non-trigonométrique pour filtrer une oscillation de torsion.

L'organe d'amortissement de butée 38 est libre de se déplacer dans la fenêtre 19, son déplacement dans cette fenêtre 19 étant ici uniquement limité par les venues en contact avec ce bord 25 de la fenêtre 19, les corps pendulaires 3 et l'organe d'interposition 20.

Dans l'exemple de la figure 4, la portion d'un des deux corps pendulaires 3 le long de laquelle roule l'organe d'interposition 20 est formée par une partie de l'extrémité circonférentielle 7 de la première masse pendulaire 5 et par une partie de l'extrémité circonférentielle 7 de la deuxième masse pendulaire 5 de l'un de ces deux corps pendulaires 3.

Toujours dans cet exemple, la portion de l'autre des deux corps pendulaires 3 le long de laquelle roule l'organe d'interposition 20 est formée par une partie de l'extrémité circonférentielle 8 de la première masse pendulaire 5 et par une partie de l'extrémité circonférentielle 8 de la deuxième masse pendulaire 5 de l'autre de ces deux corps pendulaires 3. Dans l'exemple de la figure 4, chaque organe d'interposition 20 s'étend ainsi dans une fenêtre 19 sur une dimension axiale lui permettant de venir en contact avec :
- la première et la deuxième masses pendulaires 5 de l'un des deux corps pendulaires 3, et
- la première et la deuxième masses pendulaires 5 de l'autre des deux corps pendulaires 3.

Dans l'exemple de la figure 4, chaque organe d'interposition présente plusieurs diamètres distincts se succédant. La portion médiane de l'organe d'interposition 20 présente ainsi un diamètre supérieur à celui des portions d'extrémité.

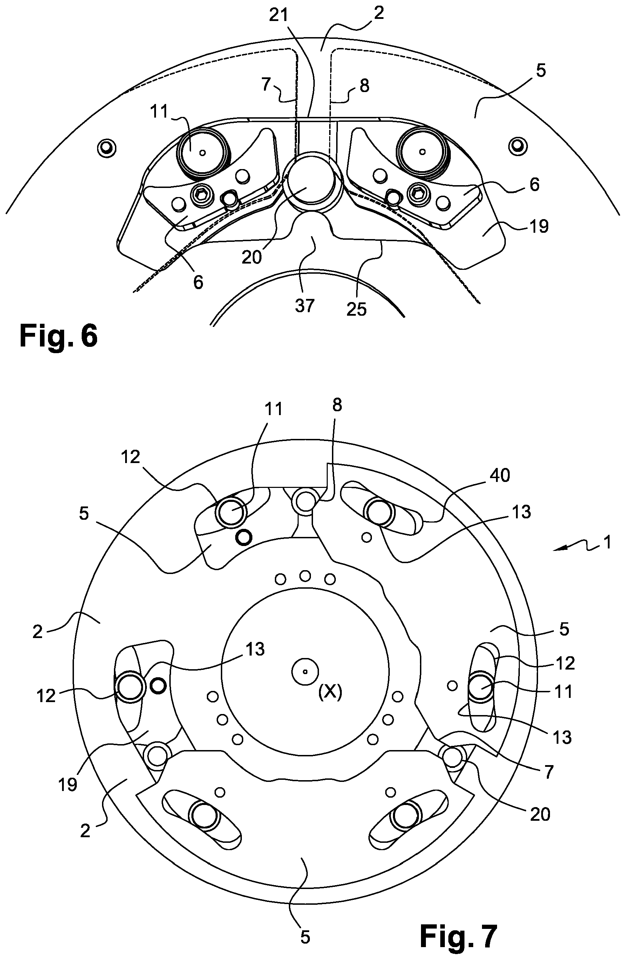

Dans l'exemple des figures 5 et 6, chaque organe d'interposition 20 est apte à venir en contact avec le bord radialement intérieur 25 de la fenêtre 19 et à rouler le long d'une portion de ce bord 25 lorsque les corps pendulaires 3 se déplacent du fait d'une oscillation de torsion vue par le dispositif 1. L'organe d'interposition 20 vient alors simultanément en contact avec cette portion du bord 25, un des deux corps pendulaires 3, et l'autre des deux corps pendulaires 3 au moins lorsque le moteur thermique du véhicule est à l'arrêt.

Comme on peut notamment le voir sur les figures 5 et 6, le bord radialement intérieur 25 de la fenêtre 19 peut définir une protubérance 37 faisant saillie radialement dans la fenêtre 19, et l'organe d'interposition 20 repose contre cette protubérance lorsque le moteur thermique du véhicule est à l'arrêt. Cette protubérance 37 présente une forme arrondie dans le plan de la figure 6, et cette forme est choisie pour que l'organe d'interposition 20 reste à une distance constante du bord de cette protubérance lorsqu'il se déplace dans la fenêtre 19 sous l'effet du déplacement des deux corps pendulaires 3, tant que ces derniers ne sont pas désynchronisés.

Dans l'exemple de la figure 5, similairement à ce qui a été décrit en référence aux figures 1 à 3, la portion d'un des deux corps pendulaires 3 le long de laquelle roule l'organe d'interposition 20 est formée par une partie d'un des organes de liaison 6 de ce corps pendulaire, et la portion de l'autre des deux corps pendulaires le long de laquelle roule l'organe d'interposition 20 est formée par une partie d'un des organes de liaison 6 de l'autre des deux corps pendulaires 3. Cette partie d'un organe de liaison 6 est ici une fraction de sa surface radialement intérieure.

Ainsi, chaque organe d'interposition 20 est apte à venir en contact, simultanément ou non, avec :
- une fraction de la surface radialement intérieure d'un organe de liaison 6 d'un des deux corps pendulaires 3,
- une fraction de la surface radialement intérieure d'un organe de liaison 6 d'un autre des deux corps pendulaires 3, et
- une portion du bord radialement intérieur 25 de la fenêtre 19.

Dans l'exemple de la figure 6, similairement à ce qui a été décrit en référence à la figure 4, la portion d'un des deux corps pendulaires 3 le long de laquelle roule l'organe d'interposition 20 est formée par une partie de l'extrémité circonférentielle 7 de la première masse pendulaire 5 et par une partie de l'extrémité circonférentielle 7 de la deuxième masse pendulaire 5 de l'un de ces deux corps pendulaires 3. Toujours dans cet exemple, la portion de l'autre des deux corps pendulaires 3 le long de laquelle roule l'organe d'interposition 20 est formée par une partie de l'extrémité circonférentielle 8 de la première masse pendulaire 5 et par une partie de l'extrémité circonférentielle 8 de la deuxième masse pendulaire 5 de l'autre de ces deux corps pendulaires 3.

Ainsi, chaque organe d'interposition 20 est apte à venir en contact, simultanément ou non, avec :
- une fraction de l'extrémité circonférentielle 7 de la première masse pendulaire 5 et de l'extrémité circonférentielle 7 de la deuxième masse pendulaire 5 de l'un des deux corps pendulaires 3,
- une fraction de l'extrémité circonférentielle 8 de la première masse pendulaire 5 et de l'extrémité circonférentielle 8 de la deuxième masse pendulaire 5 de l'autre des deux corps pendulaires 3, et
- une portion du bord radialement intérieur 25 de la fenêtre 19.

Selon une deuxième variante du premier exemple de mise en oeuvre de l'invention qui est représentée sur la figure 7, chaque organe de roulement 11 coopère avec deux deuxièmes pistes de roulement 13 distinctes et solidaires d'un corps pendulaire 3. Sur cette figure 7, l'un des corps pendulaires 3 n'est pas représenté en totalité.

L'une des deuxièmes pistes de roulement 13 est définie par la première masse pendulaire 5 du corps pendulaire 3 et l'autre de ces deuxièmes pistes de roulement 13 est définie par la deuxième masse pendulaire 5 de ce corps pendulaire 3. Chaque masse pendulaire 5 présente dans cet exemple deux cavités 40, et chacune de ces cavités 40 reçoit une partie d'un organe de roulement 11 qui coopère avec la deuxième piste de roulement 13 formée par une partie du contour de cette cavité 40. La première piste de roulement 12 avec laquelle coopère cet organe de roulement 11 est, comme précédemment, formée par une partie du contour 16 de la fenêtre 19.

Dans l'exemple de la figure 7, chaque organe de liaison 6 est un rivet qui est également reçu dans la fenêtre 19.

Comme on peut le voir sur cette figure 7, la portion d'un des deux corps pendulaires 3 le long de laquelle roule l'organe d'interposition 20 est formée par une partie de l'extrémité circonférentielle 7 de la première masse pendulaire 5 et par une partie de l'extrémité circonférentielle 7 de la deuxième masse pendulaire 5 de ce corps pendulaire 3, et la portion de l'autre des deux corps pendulaires 3 le long de laquelle roule l'organe d'interposition 20 est formée par une partie de l'extrémité circonférentielle 8 de la première masse pendulaire et par une partie de l'extrémité circonférentielle 8 de la deuxième masse pendulaire 5 de cet autre corps pendulaires 3, et ces extrémités circonférentielles 7 et 8 sont en regard.

Similairement à ce qui a été mentionné précédemment, chaque organe d'interposition 20 de l'exemple de la figure 7 peut s'étendre dans une fenêtre 19 sur une dimension axiale lui permettant de venir en contact avec :
- la première et la deuxième masses pendulaires 5 de l'un des deux corps pendulaires 3, et
- la première et la deuxième masses pendulaires 5 de l'autre des deux corps pendulaires 3.

En variante, l'organe d'interposition ne vient en contact que de la première masse pendulaire de l'un des deux corps pendulaires et que de la première masse pendulaire de l'autre des deux corps pendulaires. En variante encore, l'organe d'interposition ne vient en contact que de la deuxième masse pendulaire de l'un des deux corps pendulaires et que de la deuxième masse pendulaire de l'autre des deux corps pendulaires.

Les figures 1 à 7 se rapportent au premier exemple de mise en oeuvre de l'invention, selon lequel le dispositif 1 comprend un unique support et chaque corps pendulaire 3 comprend deux masses pendulaires appariées et s'étendant chacune d'un côté 4 du support 2.

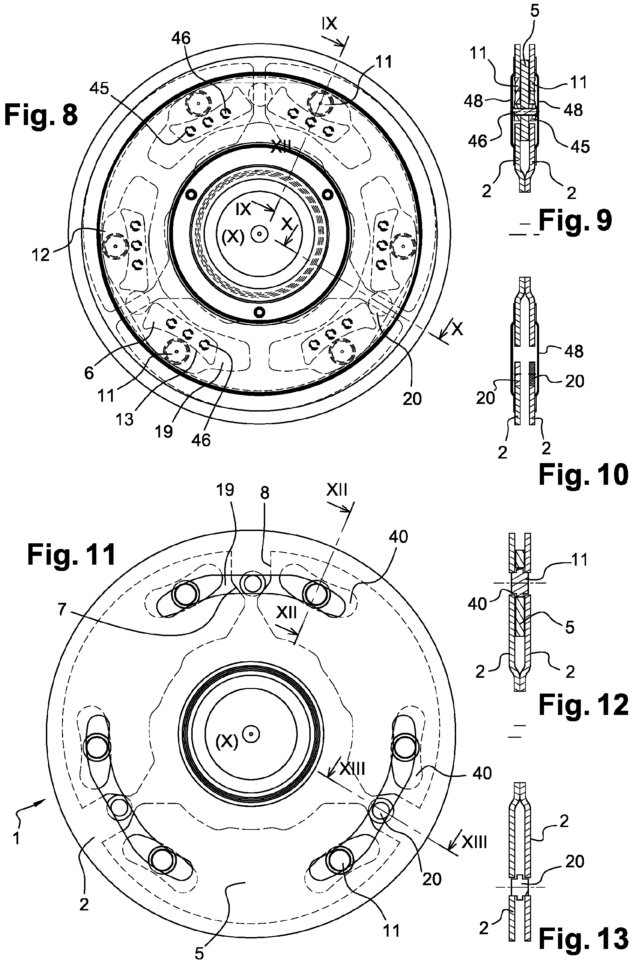

On va maintenant décrire en référence aux figures 8 à 13 deux variantes d'un dispositif d'amortissement d'oscillations de torsion selon un deuxième exemple de mise en oeuvre de l'invention.

Selon ce deuxième exemple de mise en oeuvre de l'invention, le dispositif comprend deux supports 2 distincts décalés axialement et solidaires. Chaque corps pendulaire 3 comprend en outre, dans l'exemple décrit, une unique masse pendulaire 5 disposée axialement entre les deux supports 2.

Dans l'exemple des figures 8 à 10, deux capots 48 sont positionnés axialement autour de l'ensemble formé par les deux supports 2 et les corps pendulaires 3, de sorte que l'on trouve successivement axialement :
- l'un des capots 48,
- l'un des supports 2,
- une masse pendulaire 5,
- l'autre des supports 2, et
- l'autre des capots 48.

Selon une première variante de ce deuxième exemple de mise en oeuvre de l'invention, qui est représentée sur les figures 8 à 10, chaque corps pendulaire 3 présentant une excroissance 45 faisant saillie axialement dans une fenêtre 19 d'un des supports 2. Cette excroissance 45, qui peut ou non être réalisée d'une seule pièce avec la masse pendulaire 5 du corps pendulaire 3, définit ici une deuxième piste de roulement 13 solidaire du corps pendulaire.

Dans l'exemple représenté sur les figures 8 à 10, deux excroissances 45 sont prévues sur chaque côté d'une masse pendulaire 5. D'un côté à l'autre de la masse pendulaire 5, ces excroissances s'étendent ici axialement dans des directions opposées et elles sont axialement superposées. Deux excroissances 45 axialement superposées peuvent être reliées ensemble et à la masse pendulaire 5 via des rivets 46, comme représenté sur les figures 8 et 9.

Comme on le devine sur la figure 9, les deux excroissances 45 ménagées d'un premier côté de la masse pendulaire 5 font alors saillie dans deux fenêtres 19 différentes de l'un des supports 2 tandis que les deux excroissances 45 ménagées d'un deuxième côté de la masse pendulaire 5, opposé au premier côté, font alors saillie dans deux fenêtres 19 différentes de l'autre des deux supports 2 du dispositif 1.

Dans l'exemple considéré, le déplacement de chaque corps pendulaire 3 par rapport au support 2 est guidé par quatre organes de roulement 11 distincts:
- un premier organe de roulement 11 coopérant avec une première piste de roulement 12 définie par une partie du contour d'une des fenêtres 19 ménagées dans le support 2 disposé du premier côté de la masse pendulaire 5 et avec une deuxième piste de roulement 13 définie par une des excroissances 45 ménagées de ce premier côté de la masse pendulaire 5,
- un deuxième organe de roulement 11 coopérant avec une première piste de roulement 12 définie par une partie du contour d'une autre fenêtre 19 ménagée dans le support 2 disposé du premier côté de la masse pendulaire 5 et avec une deuxième piste de roulement 13 définie par une autre des excroissances 45 ménagées de ce premier côté de la masse pendulaire 5,

- un troisième organe de roulement 11 coopérant avec une première piste de roulement 12 définie par une partie du contour d'une des fenêtres 19 ménagées dans le support 2 disposé du deuxième côté de la masse pendulaire 5 et avec une deuxième piste de roulement 13 définie par une des excroissances 45 ménagées de ce deuxième côté de la masse pendulaire 5, et
- un quatrième organe de roulement 11 coopérant avec une première piste de roulement 12 définie par une partie du contour d'une autre fenêtre 19 ménagée dans le support 2 disposé du deuxième côté de la masse pendulaire 5 et avec une deuxième piste de roulement 13 définie par une autre des excroissances 45 ménagées de ce deuxième côté de la masse pendulaire 5.

Dans l'exemple des figures 8 à 10, la portion d'un des deux corps pendulaires 3 le long de laquelle roule un organe d'interposition 20 est formée par une partie de l'excroissance 45 de ce corps pendulaire 3 et la portion de l'autre des deux corps pendulaires 5 le long de laquelle roule l'organe d'interposition 20 est formée par une partie de l'excroissance 45 de cet autre des deux corps pendulaires 3. Chaque excroissance 45 peut alors d'une part coopérer avec un organe de roulement 11 via une portion de sa surface radialement extérieure qui définit une deuxième piste de roulement 13 et d'autre part avec un organe d'interposition 20 via une fraction de sa surface latérale.

Toujours dans cet exemple, et comme représenté sur la figure 10, deux organes d'interposition 20 distincts sont prévus entre deux corps pendulaires 3 voisins circonférentiellement. L'un de ces organes d'interposition 20 est disposé du premier côté des masses pendulaires 5 et il peut venir en contact avec:
- une portion d'un bord de la fenêtre 19 dans laquelle font saillie axialement une excroissance 45 de l'un des deux corps pendulaires 3 et une excroissance 45 de l'autre des deux corps pendulaires 3 et,
- ces deux excroissances 45.

Toujours dans ce cas, l'autre de ces organes d'interposition 20 est disposé du deuxième côté des masses pendulaires 5.

Les figures 11 à 13 représentent une deuxième variante de ce deuxième exemple de mise en oeuvre de l'invention.

Selon cette deuxième variante, chaque masse pendulaire 5 présente au moins deux cavités traversantes 40, de manière à ce que chaque organe de roulement 11 soit reçu :
- dans une fenêtre 19 ménagée dans l'un des deux supports 2,
- dans une cavité 40 ménagée dans la masse pendulaire 5, et
- dans une fenêtre 19 ménagée dans l'autre des deux supports 2.

Selon cette deuxième variante, la portion d'un des deux corps pendulaires 3 avec laquelle vient en contact l'organe d'interposition est formée par une partie de l'extrémité circonférentielle 7 de la masse pendulaire 5 de l'un des deux corps pendulaires 3, et la portion de l'autre des deux corps pendulaires 3 le long de laquelle roule l'organe d'interposition 20 est formée par une partie de l'extrémité circonférentielle 8 de la masse pendulaire 5 de l'autre des deux corps pendulaires 3, ces extrémités circonférentielles 7 et 8 étant en regard.

Selon cette deuxième variante, chaque organe d'interposition 20 coopère avec les deux supports 2 et avec deux corps pendulaires 3 voisins circonférentiellement.

L'invention n'est pas limitée aux exemples qui viennent d'être décrits.

On peut par exemple combiner entre elles des caractéristiques décrites en référence à des modes de réalisation différents.

A titre d'exemples :
- un organe de roulement 11 selon les figures 2 et 3 peut être utilisé dans les dispositifs représentés sur les figures 4 à 13, ou
- un organe d'interposition coopérant avec le bord radialement intérieur 25 d'une fenêtre 19 s'applique également aux dispositifs des figures 7 à 13.

Les figures 1, 7 et 9 à 13 sont des vues à l'échelle, de sorte que des mesures peuvent être obtenues de ces dernières par l'homme du métier.

En particulier, on peut calculer:
- des ratios entre des dimensions axiales du dispositif d'amortissement d'oscillations de torsion, et
- des ratios entre des dimensions radiales du dispositif d'amortissement d'oscillations de torsion.

## Revendications

1. Dispositif d'amortissement d'oscillations de torsion (1), comprenant :
- au moins un support (2) apte à se déplacer en rotation autour d'un axe (X),
- une pluralité de corps pendulaires (3), chaque corps pendulaire (3) étant mobile par rapport au support (2),
- une pluralité d'organes de roulement (11), chaque organe de roulement (11) coopérant avec une première piste de roulement (12) solidaire du support (2) et avec une deuxième piste de roulement solidaire (13) d'un corps pendulaire (3), le déplacement de chaque corps pendulaire (3) par rapport au support (2) étant guidé par au moins deux de ces organes de roulement (11), et
- une pluralité d'organes d'interposition (20),
le support (2) comprenant une pluralité de fenêtres (19) dans chacune desquelles deux organes de roulement (11) sont reçus, l'un de ces organes de roulement (11) coopérant avec une deuxième piste de roulement (13) solidaire d'un des corps pendulaires (3) et l'autre de ces organes de roulement (11) coopérant avec une deuxième piste de roulement (13) solidaire d'un autre de ces corps pendulaires (3), lesdits corps pendulaires (3) étant voisins circonférentiellement,
chaque organe d'interposition (20) étant disposé dans une fenêtre (19) du support (2) et étant mobile par rapport à chacun des deux corps pendulaires (3) dont le déplacement par rapport au support (2) est guidé par un des deux organes de roulement (11) reçus dans cette fenêtre (19), chaque organe d'interposition (20) étant apte à venir en contact:
- d'une part avec une portion du contour (16) de la fenêtre (19) dans laquelle il est reçu,
- d'autre part avec une portion (6, 7, 8, 45) d'un des deux corps pendulaires (3), et
- d'autre part avec une portion (6, 7, 8, 45) de l'autre des deux corps pendulaires (3).

2. Dispositif selon la revendication 1, chaque organe d'interposition roulant :
- d'une part le long de la portion du contour (16) de la fenêtre (19) dans laquelle il est reçu,
- d'autre part le long de la portion (6, 7, 8, 45) d'un des deux corps pendulaires (3), et
- d'autre part le long de la portion (6, 7, 8, 45) de l'autre des deux corps pendulaires (3).

3. Dispositif selon la revendication 1 ou 2, le centre de gravité de chaque corps pendulaire (3) décrivant une courbe, lors de son déplacement par rapport au support (2) pour filtrer une oscillation de torsion, et la portion (6, 7, 8, 45) d'un des deux corps pendulaires (3) avec laquelle vient en contact l'organe d'interposition (20) et la portion (6, 7, 8, 45) de l'autre des deux corps pendulaires (3) avec laquelle vient en contact l'organe d'interposition (20) définissant chacun une courbe de la même famille que celle décrite par le centre de gravité de chaque corps pendulaire (3).

4. Dispositif selon l'une quelconque des revendications précédentes, l'organe d'interposition (20) venant simultanément au contact de la portion du contour (16) de la fenêtre (19), de la portion (6, 7, 8, 45) d'un des deux corps pendulaires (3) et de la portion (6, 7, 8, 45) de l'autre des deux corps pendulaires (3).

5. Dispositif selon quelconque des revendications 2 à 4, la portion du contour (16) de la fenêtre (19) du support (2) avec laquelle vient en contact l'organe d'interposition (20) appartenant au bord radialement extérieur (21) de cette fenêtre (19), comprenant notamment un organe d'amortissement de butée (30) disposé radialement entre le bord radialement intérieur (25) de la fenêtre (19) et l'organe d'interposition (20), l'organe d'amortissement de butée (38) étant apte à se comprimer lors d'un contact avec ce bord radialement intérieur (25) de la fenêtre (19).

6. Dispositif selon l'une quelconque des revendications 1 à 4, la portion du contour (16) de la fenêtre (19) du support (2) avec laquelle vient en contact l'organe d'interposition (20) appartenant au bord radialement intérieur (25) de cette fenêtre (19).

7. Dispositif selon l'une quelconque des revendications 1 à 6, le support (2) étant unique et chaque corps pendulaire (3) comprenant :
- une première et une deuxième masses pendulaires (5) espacées axialement l'une par rapport à l'autre, la première masse pendulaire (5) étant disposée axialement d'un premier côté (4) du support (2) et la deuxième masse pendulaire (5) étant disposée axialement d'un deuxième côté (4) du support (2), et
- au moins un organe de liaison (6) de la première et de la deuxième masses pendulaires (5), appariant lesdites masses.

8. Dispositif selon la revendication 7, chaque corps pendulaire (3) comprenant deux organes de liaison (6) appariant la première (5) et la deuxième (5) masse pendulaires, chaque organe de liaison (6) définissant une deuxième piste de roulement (13) coopérant respectivement avec l'un des deux organes de roulement (11) guidant le déplacement de ce corps pendulaire (3) par rapport au support (2).

9. Dispositif selon la revendication 8, la portion d'un des deux corps pendulaires (3) avec laquelle vient contact l'organe d'interposition (20) étant formée par une partie d'un des organes de liaison (6) de ce corps pendulaire, et la portion de l'autre des deux corps pendulaires (3) avec laquelle vient en contact l'organe d'interposition (20) étant formée par une partie d'un des organes de liaison (6) de l'autre des deux corps pendulaires (3), ou
la portion d'un des deux corps pendulaires (3) avec laquelle vient en contact l'organe d'interposition (20) étant formée par une partie de l'extrémité circonférentielle (7) de la première, respectivement deuxième, masse pendulaire (5) de l'un des deux corps pendulaires (3), et la portion de l'autre des deux corps pendulaires (3) avec laquelle vient en contact l'organe d'interposition (20) étant formée par une partie de l'extrémité circonférentielle (8) de la première, respectivement deuxième, masse pendulaire (5) de l'autre des deux corps pendulaires (3), ces extrémités circonférentielles (7, 8) étant en regard.

10. Dispositif selon la revendication 7, chaque organe de roulement (11) coopérant avec deux deuxièmes pistes de roulement (13) solidaires du corps pendulaire (3), l'une de ces deuxièmes pistes de roulement (13) étant définie par la première masse pendulaire (5) et l'autre de ces deuxièmes pistes de roulement (13) étant définie par la deuxième masse pendulaire (5),
la portion d'un des deux corps pendulaires (3) avec laquelle vient en contact l'organe d'interposition (20) étant formée par une partie de l'extrémité circonférentielle (7) de la première, respectivement deuxième, masse pendulaire (5) de l'un des deux corps pendulaires (3), et la portion de l'autre des deux corps pendulaires (3) avec laquelle vient en contact l'organe d'interposition (20) étant formée par une partie de l'extrémité circonférentielle (8) de la première, respectivement deuxième, masse pendulaire (5) de l'autre des deux corps pendulaires (3), ces extrémités circonférentielles (7, 8) étant en regard.

11. Dispositif selon l'une quelconque des revendications 1 à 6, comprenant deux supports (2) distincts décalés axialement et solidaires, chaque corps pendulaire (3) comprenant au moins une masse pendulaire (5) disposée axialement entre les deux supports (2).

12. Dispositif selon la revendication 11, chaque corps pendulaire (3) présentant une excroissance (45) faisant saillie axialement dans une fenêtre (19) d'un des supports (2), cette excroissance (45) définissant une deuxième piste de roulement (13) solidaire du corps pendulaire (3), la portion d'un des deux corps pendulaires (3) avec laquelle vient en contact l'organe d'interposition (20) étant formée par une partie de l'excroissance (45) de ce corps pendulaire (3) et la portion de l'autre des deux corps pendulaires (3) avec laquelle vient en contact l'organe d'interposition (20) étant formée par une partie de l'excroissance (45) de cet autre des deux corps pendulaires (3), ou la masse pendulaire (5) présentant au moins deux cavités traversantes (40), de manière à ce que chaque organe de roulement (11) soit reçu :
- dans une fenêtre (19) ménagée dans l'un des deux supports (2),
- dans une cavité (40) ménagée dans la masse pendulaire (5), et
- dans une fenêtre (19) ménagée dans l'autre des deux supports (2), et
la portion d'un des deux corps pendulaires (3) avec laquelle vient en contact l'organe d'interposition (20) étant formée par une partie de l'extrémité circonférentielle (7) de la masse pendulaire (5) de l'un des deux corps pendulaires (3), et la portion de l'autre des deux corps pendulaires (3) avec laquelle vient en contact l'organe d'interposition (20) étant formée par une partie de l'extrémité circonférentielle (8) de la masse pendulaire (5) de l'autre des deux corps pendulaires (3), ces extrémités circonférentielles (7, 8) étant en regard.

13. Dispositif selon l'une quelconque des revendications précédentes, chaque organe d'interposition (20) s'étendant axialement et présentant une section transversale de rayon constant sur toute sa longueur.

14. Dispositif selon l'une quelconque des revendications 1 à 12, chaque organe d'interposition (20) s'étendant axialement et présentant successivement au moins deux portions de section transversale de diamètres différents.

15. Dispositif selon l'une quelconque des revendications précédentes, étant configuré de manière à ce que le déplacement des corps pendulaires (3) permette de filtrer l'ordre d'excitation d'un moteur thermique de véhicule à deux cylindres.

## Patentansprüche

1. Vorrichtung (1) zum Dämpfen von Torsionsschwingungen, die Folgendes umfasst:
- wenigstens einen Träger (2), der sich um eine Achse (X) rotatorisch verlagern kann,
- mehrere Pendelkörper (3), wobei jeder Pendelkörper (3) in Bezug auf den Träger (2) beweglich ist,
- mehrere Wälzorgane (11), wobei jedes Wälzorgan (11) mit einer ersten Wälzbahn (12), die mit dem Träger (2) fest verbunden ist, und mit einer zweiten Wälzbahn (13), die mit einem Pendelkörper (3) fest verbunden ist, zusammenwirkt, wobei die Verlagerung jedes Pendelkörpers (3) in Bezug auf den Träger (2) durch wenigstens zwei dieser Wälzorgane (11) geführt wird, und
- mehrere Einfügungsorgane (20),
wobei der Träger (2) mehrere Fenster (19) aufweist, wovon in jedem zwei Wälzorgane (11) aufgenommen sind, wobei eines dieser Wälzorgane (11) mit einer zweiten Wälzbahn (13) zusammenwirkt, die mit einem der Pendelkörper (3) fest verbunden ist, und das andere dieser Wälzorgane (11) mit einer zweiten Wälzbahn (13) zusammenwirkt, die mit einem anderen dieser Pendelkörper (3) fest verbunden ist, wobei die Pendelkörper (3) in Umfangsrichtung benachbart sind,
wobei jedes Einfügungsorgan (20) in einem Fenster (19) des Trägers (2) angeordnet ist und in Bezug auf jeden der beiden Pendelkörper (3), deren Verlagerung in Bezug auf den Träger (2) durch eines der beiden Wälzorgane (11) geführt wird, die in diesem Fenster (19) aufgenommen sind, beweglich ist, wobei jedes Einfügungsorgan (20) mit Folgendem in Kontakt gelangen kann:
- einerseits mit einem Umfangsabschnitt (16) des Fensters (19), in dem es aufgenommen ist,
- andererseits mit einem Abschnitt (6, 7, 8, 45) eines der beiden Pendelkörper (3) und
- andererseits mit einem Abschnitt (6, 7, 8, 45) des anderen der beiden Pendelkörper (3).

2. Vorrichtung nach Anspruch 1, wobei jedes Einfügungsorgan rollt:
- einerseits längs des Umfangsabschnitts (16) des Fensters (19), in dem es aufgenommen ist,
- andererseits längs des Abschnitts (6, 7, 8, 45) eines der beiden Pendelkörper (3) und
- andererseits längs des Abschnitts (6, 7, 8, 45) des anderen der beiden Pendelkörper (3).

3. Vorrichtung nach Anspruch 1 oder 2, wobei der Schwerpunkt jedes Pendelkörpers (3) während seiner Verlagerung in Bezug auf den Träger (2), um eine Torsionsschwingungen zu filtern, eine Kurve beschreibt und der Abschnitt (6, 7, 8, 45) eines der beiden Pendelkörper (3), mit dem das Einfügungsorgan (20) in Kontakt gelangt, und der Abschnitt (6, 7, 8, 45) des anderen der beiden Pendelkörper (3), mit dem das Einfügungsorgan (20) in Kontakt gelangt, jeweils eine Kurve derselben Familie wie jene, die durch den Schwerpunkt jedes Pendelkörpers (3) beschrieben wird, definieren.

4. Vorrichtung nach einem der vorhergehenden Ansprüche, wobei das Einfügungsorgan (20) gleichzeitig mit dem Umfangsabschnitt (16) des Fensters (19), dem Abschnitt (6, 7, 8, 45) eines der beiden Pendelkörper (3) und dem Abschnitt (6, 7, 8, 45) des anderen der beiden Pendelkörper (3) in Kontakt gelangt.

5. Vorrichtung nach einem der Ansprüche 2 bis 4, wobei der Umfangsabschnitt (16) des Fensters (19) des Trägers (2), mit dem das Einfügungsorgan (20) in Kontakt gelangt, zu dem radial äußeren Rand (21) dieses Fensters (19) gehört und insbesondere ein Anschlagdämpfungsorgan (30) umfasst, das radial zwischen dem radial inneren Rand (25) des Fensters (19) und dem Einfügungsorgan (20) angeordnet ist, wobei sich das Anschlagdämpfungsorgan (38) bei einem Kontakt mit dem radial inneren Rand (25) des Fensters (19) zusammenziehen kann.

6. Vorrichtung nach einem der Ansprüche 1 bis 4, wobei der Umfangsabschnitt (16) des Fensters (19) des Trägers (2), mit dem das Einfügungsorgan (20) in Kontakt gelangt, zu dem radial inneren Rand (25) dieses Fensters (19) gehört.

7. Vorrichtung nach einem der Ansprüche 1 bis 6, wobei nur ein einziger Träger (2) vorhanden ist und jeder Pendelkörper (3) Folgendes umfasst:
- eine erste und eine zweite Pendelmasse (5), die relativ zueinander axial beabstandet sind, wobei die erste Pendelmasse (5) axial auf einer ersten Seite (4) des Trägers (2) angeordnet ist und die zweite Pendelmasse (5) axial auf einer zweiten Seite (4) des Trägers (2) angeordnet ist, und
- wenigstens ein Verbindungselement (6) für die erste und die zweite Pendelmasse (5), das diese Massen paart.

8. Vorrichtung nach Anspruch 7, wobei jeder Pendelkörper (3) zwei Verbindungsorgane (6) umfasst, die die erste (5) und die zweite (5) Pendelmasse paaren, wobei jedes Verbindungsorgan (6) eine zweite Wälzbahn (13) definiert, die mit einem entsprechenden der beiden Wälzorgane (11) zusammenwirkt, die die Verlagerung dieses Pendelkörpers (3) in Bezug auf den Träger (2) führt.

9. Vorrichtung nach Anspruch 8, wobei der Abschnitt einer der beiden Pendelkörper (3), mit dem das Einfügungsorgan (20) in Kontakt gelangt, durch einen Teil eines der Verbindungsorgane (6) dieses Pendelkörpers gebildet ist und der Abschnitt des anderen der beiden Pendelkörper (3), mit dem das Einfügungsorgan (20) in Kontakt gelangt, durch einen Teil eines der Verbindungsorgane (6) des anderen der beiden Pendelkörper (3) gebildet ist, oder
wobei der Abschnitt eines der beiden Pendelkörper (3), mit dem das Einfügungsorgan (20) in Kontakt gelangt, durch einen Teil des Umfangsendes (7) der ersten bzw. der zweiten Pendelmasse (5) eines der beiden Pendelkörper (3) gebildet ist und der Abschnitt des anderen der beiden Pendelkörper (3), mit dem das Einfügungsorgan (20) in Kontakt gelangt, durch einen Teil des Umfangsendes (8) der ersten bzw. der zweiten Pendelmasse (5) des anderen der beiden Pendelkörper (3) gebildet ist, wobei diese Umfangsenden (7, 8) einander gegenüber liegen.

10. Vorrichtung nach Anspruch 7, wobei jedes Wälzorgan (11) mit zwei zweiten Wälzbahnen (13), die mit dem Pendelkörper (3) fest verbunden sind, zusammenwirkt, wobei eine dieser beiden Wälzbahnen (13) durch die erste Pendelmasse (5) definiert ist und die andere dieser beiden Wälzbahnen (13) durch die zweite Pendelmasse (5) definiert ist, wobei der Abschnitt eines der beiden Pendelkörper (3), mit dem das Einfügungsorgan (20) in Kontakt gelangt, durch einen Teil des Umfangsendes (7) der ersten bzw. der zweiten Pendelmasse (5) eines der beiden Pendelkörper (3) gebildet ist und der Abschnitt des anderen der beiden Pendelkörper (3), mit dem das Einfügungsorgan (20) in Kontakt gelangt, durch einen Teil des Umfangsendes (8) der ersten bzw. der zweiten Pendelmasse (5) des anderen der beiden Pendelkörper (3) gebildet ist, wobei diese Umfangsenden (7, 8) einander gegenüber liegen.

11. Vorrichtung nach einem der Ansprüche 1 bis 6, die zwei verschiedene, axial versetzte und miteinander verbundene Träger (2) umfasst, wobei jeder Pendelkörper (3) wenigstens eine Pendelmasse (5) aufweist, die axial zwischen den beiden Trägern (2) angeordnet ist.

12. Vorrichtung nach Anspruch 11, wobei jeder Pendelkörper (3) eine Erhebung (45) aufweist, die axial in ein Fenster (19) eines der Träger (2) vorsteht, wobei diese Erhebung (45) eine zweite Wälzbahn (13) definiert, die mit dem Pendelkörper (3) fest verbunden ist, wobei der Abschnitt eines der beiden Pendelkörper (3), mit dem das Einfügungsorgan (20) in Kontakt gelangt, durch einen Teil der Erhebung (45) dieses Pendelkörpers (3) gebildet ist und der Abschnitt des anderen der beiden Pendelkörper (3), mit dem das Einfügungsorgan (20) in Kontakt gelangt, durch einen Teil der Erhebung (45) dieses anderen der beiden Pendelkörper (3) gebildet ist, oder wobei die Pendelmasse (5) wenigstens zwei durchgehende Hohlräume (40) aufweist, derart, dass jedes Wälzorgan (11) aufgenommen ist:
- in einem Fenster (19), das in einem der beiden Träger (2) ausgespart ist,
- in einem Hohlraum (40), der in der Pendelmasse (5) ausgespart ist, und
- in einem Fenster (19), das in dem anderen der beiden Träger (2) ausgespart ist und
der Abschnitt eines der beiden Pendelkörper (3), mit dem das Einfügungsorgan (20) in Kontakt gelangt, durch einen Teil des Umfangsendes (7) der Pendelmasse (5) des einen der beiden Pendelkörper (3) gebildet ist und der Abschnitt des anderen der beiden Pendelkörper (3), mit dem das Einfügungsorgan (20) in Kontakt gelangt, durch einen Teil des Umfangsendes (8) der Pendelmasse (5) des anderen der beiden Pendelkörper (3) gebildet ist, wobei diese Umfangsenden (7, 8) einander gegenüber liegen.

13. Vorrichtung nach einem der vorhergehenden Ansprüche, wobei sich jedes Einfügungsorgan (20) axial erstreckt und auf seiner gesamten Länge einen Querschnitt mit konstantem Radius aufweist.

14. Vorrichtung nach einem der Ansprüche 1 bis 12, wobei sich jedes Einfügungsorgan (20) axial erstreckt und nacheinander wenigstens zwei Querschnittsabschnitte mit unterschiedlichen Durchmessern aufweist.

15. Vorrichtung nach einem der vorhergehenden Ansprüche, die in der Weise konfiguriert ist, dass die Verlagerung der Pendelkörper (3) ermöglicht, die Ansteuerungsreihenfolge einer Fahrzeugbrennkraftmaschine mit zwei Zylindern zu filtern.

## Claims

1. A device for damping torsional oscillations (1), comprising:
- at least one support (2) capable of rotational displacement around an axis (X);
- a plurality of pendulum assemblies (3), each pendulum assembly (3) being movable with respect to the support (2);
- a plurality of rolling members (11), each rolling member (11) interacting with a first raceway (12) integral with the support (2) and with a second raceway (13) integral with a pendulum assembly (3), the displacement of each pendulum assembly (3) with respect to the support (2) being guided by at least two of those rolling members (11); and
- a plurality of interposition members (20),
the support (2) comprising a plurality of windows (19) in each of which two rolling members (11) are received, one of those rolling members (11) interacting with a second raceway (13) integral with one of the pendulum assemblies (3), and the other of those rolling members (11) interacting with a second raceway (13) integral with another of those pendulum assemblies (3), said pendulum assemblies (3) being circumferentially adjacent;
each interposition member (20) being arranged in a window (19) of the support (2) and being movable with respect to each of the two pendulum assemblies (3) whose displacement with respect to the support (2) is guided by one of the two rolling members (11) received in that window (19), each interposition member (20) being capable of coming into contact
- on the one hand with a region of the periphery (16) of the window (19) in which it is received,
- on the other hand with a region (6, 7, 8, 45) of one of the two pendulum assemblies (3), and
- on the other hand with a region (6, 7, 8, 45) of the other of the two pendulum assemblies (3).

2. The device according to Claim 1, wherein each interposition member rolls
- on the one hand along the region of the periphery (16) of the window (19) in which it is received,
- on the other hand along the region (6, 7, 8, 45) of one of the two pendulum assemblies (3), and
- on the other hand along the region (6, 7, 8, 45) of the other of the two pendulum assemblies (3).

3. The device according to Claim 1 or Claim 2, wherein the center of gravity of each pendulum assembly (3) describes a curve upon its displacement with respect to the support (2) in order to filter a torsional oscillation, and the region (6, 7, 8, 45) of one of the two pendulum assemblies (3) with which the interposition member (20) comes into contact, and the region (6, 7, 8, 45) of the other of the two pendulum assemblies (3) with which the interposition member (20) comes into contact, each defining a curve of the same family as the one described by the center of gravity of each pendulum assembly (3).

4. The device according to any preceding Claim, wherein the interposition member (20) comes into contact simultaneously with the region of the periphery (16) of the window (19), with the region (6, 7, 8, 45) of one of the two pendulum assemblies (3), and with the region (6, 7, 8, 45) of the other of the two pendulum assemblies (3).

5. The device according to any one of Claims 2 to 4, wherein that region of the periphery (16) of the window (19) of the support (2) with which the interposition member (20) comes into contact belongs to the radially external edge (21) of that window (19), the device notably comprising an abutment damping member (30) arranged radially between the radially internal edge (25) of the window (19) and the interposition member (20), the abutment damping member (30) being capable of compressing upon contact with that radially internal edge (25) of the window (19).

6. The device according to any one of Claims 1 to 4, wherein that region of the periphery (16) of the window (19) of the support (2) with which the interposition member (20) comes into contact belongs to the radially internal edge (25) of that window (19).

7. The device according to any one of Claims 1 to 6, wherein there is a single support (2) and each pendulum assembly (3) comprising:
- a first and a second pendulum mass (5) spaced axially with respect to one another, the first pendulum mass (5) being arranged axially on a first side (4) of the support (2) and the second pendulum mass (5) being arranged axially on a second side (4) of the support (2), and
- at least one member (6) connecting the first and the second pendulum mass (5), pairing said masses.

8. The device according to Claim 7, wherein each pendulum assembly (3) comprising two connecting members (6) pairing the first (5) and the second pendulum mass (5), each connecting member (6) defining a second raceway (13) interacting respectively with one of the two rolling members (11) guiding the displacement of that pendulum assembly (3) with respect to the support (2).

9. The device according to Claim 8,
wherein that region of one of the two pendulum assemblies (3) with which the interposition member (20) comes into contact being constituted by a portion of one of the connecting members (6) of that pendulum assembly, and that portion of the other of the two pendulum assemblies (3) with which the interposition member (20) comes into contact being constituted by a portion of one of the connecting members (6) of the other of the two pendulum assemblies (3),
or
wherein that region of one of the two pendulum assemblies (3) with which the interposition member (20) comes into contact being constituted by a portion of the circumferential end (7) respectively of the first or second pendulum mass (5) of one of the two pendulum assemblies (3), and that region of the other of the two pendulum assemblies (3) with which the interposition member (20) comes into contact being constituted by a portion of the circumferential end (8) respectively of the first or second pendulum mass (5) of the other of the two pendulum assemblies (3), those circumferential ends (7, 8) facing each other.

10. The device according to Claim 7, wherein each rolling member (11) interacts with two second raceways (13) integral with the pendulum assembly (3), one of those second raceways (13) being defined by the first pendulum mass (5) and the other of those second raceways (13) being defined by the second pendulum mass (5), that region of one of the two pendulum assemblies (3) with which the interposition member (20) comes into contact being constituted by a portion of the circumferential end (7) respectively of the first or second pendulum mass (5) of one of the two pendulum assemblies (3), and that region of the other of the two pendulum assemblies (3) with which the interposition member (20) comes into contact being constituted by a portion of the circumferential end (8) respectively of the first or second pendulum mass (5) of the other of the two pendulum assemblies (3), those circumferential ends (7, 8) facing each other.

11. The device according to any one of Claims 1 to 6, comprising two distinct, axially offset, integral supports (2), each pendulum assembly (3) comprising at least one pendulum mass (5) arranged axially between the two supports (2).

12. The device according to Claim 11,
wherein each pendulum assembly (3) having a projection (45) projecting axially into a window (19) of one of the supports (2), this projection (45) defining a second raceway (13) integral with the pendulum assembly (3), that region of one of the two pendulum assemblies (3) with which the interposition member (20) comes into contact being constituted by a portion of the projection (45) of that pendulum assembly (3), and that region of the other of the two pendulum assemblies (3) with which the interposition member (20) comes into contact being constituted by a portion of the projection (45) of that other of the two pendulum assemblies (3),
or
wherein the pendulum mass (5) has at least two passthrough cavities (40), so that each rolling member (11) is received
- in a window (19) configured in one of the two supports (2),
- in a cavity (40) configured in the pendulum mass (5), and
- in a window (19) configured in the other of the two supports (2),
that region of one of the two pendulum assemblies (3) with which the interposition member (20) comes into contact being constituted by a portion of the circumferential end (7) of the pendulum mass (5) of one of the two pendulum assemblies (3), and that region of the other of the two pendulum assemblies (3) with which the interposition member (20) comes into contact being constituted by a portion of the circumferential end (8) of the pendulum mass (5) of the other of the two pendulum assemblies (3), those circumferential ends (7, 8) facing each other.

13. The device according to any one of Claims 1 to 12, wherein each interposition member (20) extends axially and has a cross section of constant radius over its entire length.

14. The device according to any one of Claims 1 to 12, wherein each interposition member (20) extends axially and exhibits successively at least two regions having cross sections of different diameters.

15. The device according to any one of Claims 1 to 14, wherein the displacement of the pendulum assemblies (3) configured to allow filtering of the excitation order of a two-cylinder combustion engine of a vehicle.
